# EUROPEAN PATENT APPLICATION

(11) **EP 4 686 322 A1**
(43) Date of publication of application: **28.01.2026**
(21) Application number: 24774454.3
(22) Date of filing: 31.01.2024
(51) Int. Cl.: H05B 3/34, F16L 53/35, H05B 3/20

(54) **HEATER COUPLING BODY, HEATER COUPLING BODY ASSEMBLY SET, AND PIPING WITH HEATER**

(30) Priority: 23.03.2023 JP 2023047145
(71) Applicant: Tomoegawa Corporation, Tokyo 104-8335 (JP)
(72) Inventor: SUGAWARA, Yosuke, Shizuoka-shi, Shizuoka 421-0192 (JP); GOTO, Makoto, Shizuoka-shi, Shizuoka 421-0192 (JP)
(74) Representative: TBK
(86) International application number: PCT/JP2024/003002
(87) International publication number: WO 2024/195308

(57) **Abstract**

The present invention addresses the problem of providing a heater coupling body capable of more uniformly heating an object to be heated. This problem is resolved by means of a heater coupling body including a plurality of sheet-like heaters, wherein: the sheet-like heaters each have a heat-generating layer and an electrode portion electrically connected to the heat-generating layer; the electrode portion of one sheet-like heater and the electrode portion of another sheet-like heater are connected by means of a connecting line; and when main surfaces of the heat-generating layers are viewed from a direction perpendicular thereto, at least a portion of the heat-generating layer in each sheet-like heater exists on a straight line connecting the two electrode portions connected by the connecting line.

## Description

### TECHNICAL FIELD

The present invention relates to a heater coupling body, a heater coupling body assembly set, and heater-equipped piping.

### BACKGROUND ART

Heaters capable of heating piping or the like have heretofore been proposed.

Patent Document 1 describes a heater for piping which includes a heat-generating part layer and a thermal insulation part layer and is configured to heat or keep warm the piping to be heated by being wrapped in a width direction around the outer peripheral portion of the piping, the heat-generating part layer and the thermal insulation part layer being configured separately from each other, the heat-generating part layer having a heating element arranged on a surface on the heating surface side of a belt-shaped substrate having heat resistance and flexibility, and a heat-resistant covering material covering the whole of the heating element, the thermal insulation part layer having a belt-shaped thermal insulation material covered with a heat-resistant covering material, the thermal insulation part layer being stacked on the non-heating surface side of the heat-generating part layer so that their edges on both sides in the width direction may be flush with each other, the edges of the stacked layers are integrally joined together to form a main body part, and the width of the thermal insulation part layer being set longer to such an extent that the inner side surface of the thermal insulation part layer is loosely attached to the outer peripheral surface of the heat-generating part layer when the heater for the piping is wrapped around the piping so that the heating surface of the heat-generating part layer of the former is closely attached to a surface of the latter.

Patent Document 2 describes a heater apparatus for heating objects having two-dimensional or three-dimensional curvature such as pipes, valves or other objects, the heater apparatus including: a heater mat having an inner surface formed to have a shape and a size so that the inner surface can surround an object to be heated and fit to a curved surface thereof, and an outer surface spaced radially outward from the inner surface, the heater mat including a heat producing material composed of a flexible but substantially unstretchable solid material matrix; and a jacket formed around and bonded in immovable relation to the outer surface of the heater mat, the jacket being made of a resiliently stretchable and compressible composite material containing cells of air or gas dispersed throughout a matrix of solid material, wherein the composite material is less dense, more elastic, more compressible, less thermally conductive, and thicker than the heater mat and is resiliently resistant to compression to a sufficient extent that the material has an inherent resilience for returning to and maintaining the size and shape with which the inner surface of the heater mat can surround and fit to the curved surface of the object to be heated when external force to deform the heater mat is removed.

### CITATION LIST

### PATENT DOCUMENTS

Patent Document 1: JP 4319537 B
Patent Document 2: JP 2000-505582 A

### SUMMARY OF THE INVENTION

### PROBLEM TO BE SOLVED BY THE INVENTION

The present invention provides a heater coupling body and a heater coupling body assembly set which are capable of more uniformly heating an object to be heated. The present invention also provides heater-equipped piping which is capable of more uniform heating.

### MEANS FOR SOLVING THE PROBLEM

The inventors of the present invention have made an intensive study to solve the problem described above and completed the present invention.

The present invention provides the following (1) to (10).
(1) A heater coupling body including: a plurality of sheet-like heaters, wherein:
   each of the sheet-like heaters has a heat-generating layer; and electrode portions electrically connected to the heat-generating layer,
   an electrode portion included in one sheet-like heater is connected to an electrode portion included in another sheet-like heater by a connecting wire, and
   when main surfaces of heat-generating layers are seen from their perpendicular line directions, at least parts of the heat-generating layers in the respective sheet-like heaters are present on a line formed by the two electrode portions connected to each other by the connecting wire.
(2) The heater coupling body according to (1) above, wherein each of the sheet-like heaters has a stacked structure in which the heat-generating layer is stacked so as to be sandwiched between two insulating layers.
(3) The heater coupling body according to (1) or (2) above, wherein the connecting wire is made of stranded wire.
(4) The heater coupling body according to any one of (1) to (3) above, wherein the heat-generating layer has a thickness of 20 to 150 µm and a resistance value of 10 to 300 Ω.
(5) The heater coupling body according to any one of (1) to (4) above, wherein the heater coupling body is used by respectively wrapping individual sheet-like heaters around surfaces of two straight pipe portions having a binding portion interposed therebetween, in piping including a part where the two straight pipe portions are connected together through the binding portion so that their axes may intersect each other, and connecting the electrode portion included in the one sheet-like heater to the electrode portion included in the another sheet-like heater by the connecting wire.
(6) A heater coupling body assembly set including: a plurality of sheet-like heaters and a connecting wire, wherein:
   each of the sheet-like heaters has a heat-generating layer; and electrode portions electrically connected to the heat-generating layer, and
   in a case where, in piping including a part where two straight pipe portions are connected together through a binding portion so that their axes may intersect each other, individual sheet-like heaters are respectively wrapped around surfaces of the two straight pipe portions having the binding portion interposed therebetween, and an electrode portion included in one sheet-like heater is connected to an electrode portion included in another sheet-like heater by the connecting wire, when main surfaces of heat-generating layers are seen from their perpendicular line directions, at least parts of the heat-generating layers in the respective sheet-like heaters are present on a line formed by the two electrode portions connected to each other by the connecting wire.
(7) The heater coupling body assembly set according to (6) above, wherein each of the sheet-like heaters has a stacked structure in which the heat-generating layer is stacked so as to be sandwiched between two insulating layers.
(8) The heater coupling body assembly set according to (6) or (7) above, wherein the connecting wire is made of stranded wire.
(9) The heater coupling body assembly set according to any one of (6) to (8) above, wherein the heat-generating layer has a thickness of 20 to 150 µm and a resistance value of 10 to 300 Ω.
(10) Heater-equipped piping including: the heater coupling body according to (1) or (2) wrapped around surfaces of piping including a part where two straight pipe portions are connected together through a binding portion so that their axes may intersect each other, wherein:
   individual sheet-like heaters are respectively disposed on surfaces of the two straight pipe portions having the binding portion interposed therebetween,
   an electrode portion included in one sheet-like heater is connected to an electrode portion included in another sheet-like heater by a connecting wire, and
   when main surfaces of heat-generating layers are seen from their perpendicular line directions, at least parts of the heat-generating layers in the respective sheet-like heaters are present on a line formed by the two electrode portions connected to each other by the connecting wire.
(11) The heater-equipped piping according to (10) above, wherein the connecting wire is made of stranded wire.
(12) The heater-equipped piping according to (10) or (11) above, wherein each heat-generating layer has a thickness of 20 to 150 µm and a resistance value of 10 to 300 Ω.
(13) The heater-equipped piping according to any one of (10) to (12) above, wherein the sheet-like heaters are covered on their outer peripheral sides with a thermal insulation layer.

### EFFECT OF THE INVENTION

The present invention can provide a heater coupling body and a heater coupling body assembly set which are capable of more uniformly heating an object to be heated. The present invention can also provide heater-equipped piping which is capable of more uniform heating.

### BRIEF DESCRIPTION OF THE DRAWINGS

[FIG. 1] FIG. 1 is a view (schematic view) of a main surface of a heater coupling body 10 of the invention as seen from its perpendicular line direction.
[FIG. 2] FIG. 2 is a cross-sectional view (schematic view) taken along line A-A in FIG. 1.
[FIG. 3] FIG. 3 is a cross-sectional view (schematic view) taken along line B-B in FIG. 1.
[FIG. 4] FIG. 4 is a view (schematic view) of a main surface of a heater coupling body 10' of the invention as seen from its perpendicular line direction.
[FIG. 5] FIG. 5 is a cross-sectional view (schematic view) taken along line C-C in FIG. 4.
[FIG. 6] FIG. 6 is a cross-sectional view (schematic view) taken along line D-D in FIG. 4.
[FIGS. 7] Each of FIG. 7A to FIG. 7C illustrates piping 20 including a part where two straight pipe portions 21 and 22 are connected together through a binding portion 23 so that their axes ω₁ and ω₂ may intersect each other, and each drawing shows a cross-section on a surface on which the axes ω₁ and ω₂ pass.
[FIG. 8] FIG. 8 is a view (schematic view) showing heater-equipped piping 30 of the invention in which the heater coupling body 10 of the invention illustrated in FIG. 1 to FIG. 3 is wrapped around specified piping illustrated in FIG. 7B.

### DESCRIPTION OF EMBODIMENTS

The present invention will be described.

The invention provides a heater coupling body including: a plurality of sheet-like heaters, wherein: each of the sheet-like heaters has a heat-generating layer; and electrode portions electrically connected to the heat-generating layer, an electrode portion included in one sheet-like heater is connected to an electrode portion included in another sheet-like heater by a connecting wire, and when main surfaces of heat-generating layers are seen from their perpendicular line directions, at least parts of the heat-generating layers in the respective sheet-like heaters are present on a line formed by the two electrode portions connected to each other by the connecting wire.

The heater coupling body as described above is hereinafter referred to also as the "heater coupling body of the invention."

The invention also provides a heater coupling body assembly set including: a plurality of sheet-like heaters and a connecting wire, wherein: each of the sheet-like heaters has a heat-generating layer; and electrode portions electrically connected to the heat-generating layer, and in a case where, in piping including a part where two straight pipe portions are connected together through a binding portion so that their axes may intersect each other, individual sheet-like heaters are respectively wrapped around surfaces of the two straight pipe portions having the binding portion interposed therebetween, and an electrode portion included in one sheet-like heater is connected to an electrode portion included in another sheet-like heater by the connecting wire, when main surfaces of heat-generating layers are seen from their perpendicular line directions, at least parts of the heat-generating layers in the respective sheet-like heaters are present on a line formed by the two electrode portions connected to each other by the connecting wire.

The heater coupling body assembly set as described above is hereinafter referred to also as the "assembly set of the invention."

The invention further provides heater-equipped piping including: the heater coupling body of the invention wrapped around surfaces of piping including a part where two straight pipe portions are connected together through a binding portion so that their axes may intersect each other, wherein: individual sheet-like heaters are respectively disposed on surfaces of the two straight pipe portions having the binding portion interposed therebetween, an electrode portion included in one sheet-like heater is connected to an electrode portion included in another sheet-like heater by a connecting wire, and when main surfaces of heat-generating layers are seen from their perpendicular line directions, at least parts of the heat-generating layers in the respective sheet-like heaters are present on a line formed by the two electrode portions connected to each other by the connecting wire.

The heater-equipped piping as described above is hereinafter referred to also as the "heater-equipped piping of the invention."

The term "the invention" simply used in the following description refers to all of the heater coupling body of the invention, the assembly set of the invention, and the heater-equipped piping of the invention.

### <Heater Coupling Body of the Invention>

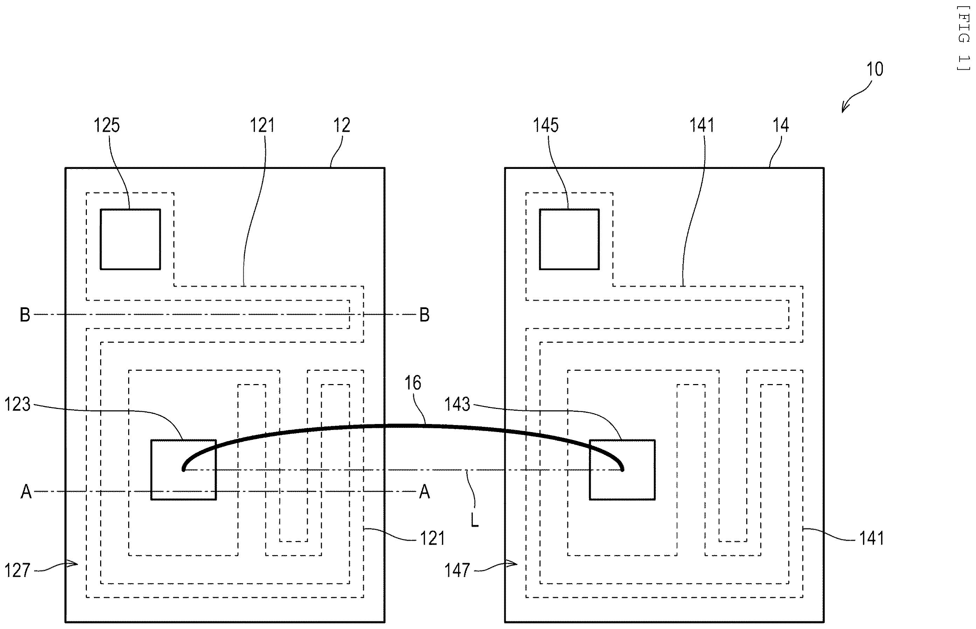

The heater coupling body of the invention will be described using FIG. 1 to FIG. 3.

FIG. 1 to FIG. 3 are schematic views showing an embodiment of the heater coupling body of the invention and the heater coupling body of the invention is not limited to the embodiment shown in FIG. 1 to FIG. 3.

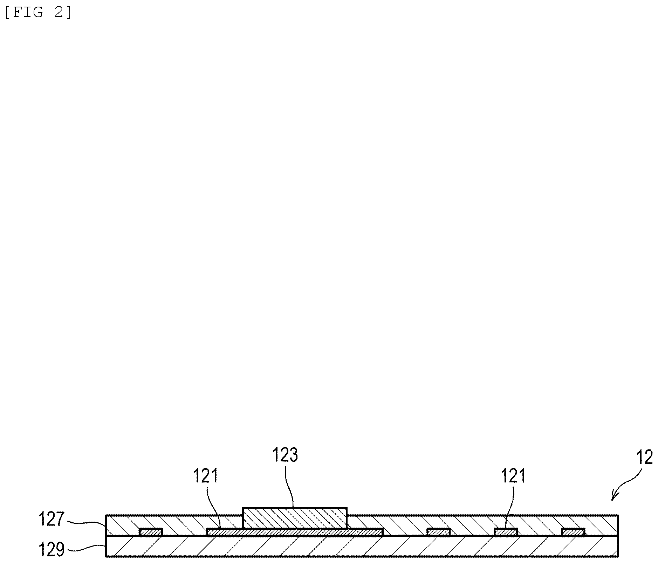

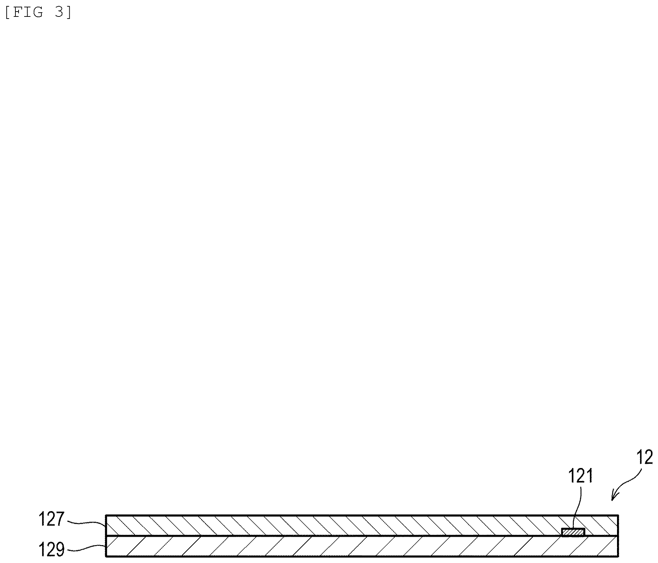

FIG. 1 is a view (schematic view) of a main surface of a heater coupling body 10 of the invention as seen from its perpendicular line direction. FIG. 2 is a cross-sectional view (schematic view) taken along line A-A in FIG. 1. FIG. 3 is a cross-sectional view (schematic view) taken along line B-B in FIG. 1.

The heater coupling body of the invention includes a plurality of sheet-like heaters, and the heater coupling body 10 of the invention shown in FIG. 1 is an example including two sheet-like heaters 12 and 14.

The number of the sheet-like heaters included in the heater coupling body of the invention is not limited as long as it is two or more.

The sheet-like heaters 12 and 14 included in the heater coupling body 10 of the invention have heat-generating layers 121 and 141, and electrode portions 123 and 143 electrically connected to the heat-generating layers 121 and 141, respectively.

In FIG. 1, the heat-generating layers 121 and 141 are not exposed at their surfaces and their positions are shown by dotted lines in FIG. 1.

The heat-generating layers 121 and 141 have a sheet shape and are electrically connected to the electrode portions 123 and 143, respectively, and are further electrically connected to other electrode portions 125 and 145, respectively. Then, the heat-generating layers 121 and 141 formed into a belt shape as shown in FIG. 1 connect the electrode portions 123 and 143 on one side to the electrode portions 125 and 145 on the other side, respectively, and form electric flow paths within the sheet-like heaters 12 and 14, respectively.

Such belt-shaped electric flow paths can be formed by patterning on a sheet-like metal sheet.

The heat-generating layers in the embodiment shown in the drawing have a sheet shape and a belt shape. According to the invention, however, the heat-generating layers may not have a belt shape but simply have a sheet shape. Alternatively, a heat-generating wire made of metal such as a Nichrome wire may be arranged so as to form a layer as a whole.

In the heater coupling body 10 of the invention, the electrode portions 125 and 145 are connected to a power supply by a connecting wire or the like.

The heater coupling body of the invention as illustrated herein is an example including the two sheet-like heaters 12 and 14, and the electrode portions 125 and 145 are connected to a power supply by a connecting wire or the like. However, in a case where a still another sheet-like heater is present, for example, the configuration may be such that one of two electrode portions included in the sheet-like heater is connected to the electrode portion 125 by a connecting wire or the like and the other electrode portion included therein is connected to a power supply by a connecting wire or the like together with the electrode portion 145.

In the case of the heater coupling body 10 of the invention, each of the electrode portions 123 and 143 also has a sheet shape.

Further, in this embodiment, the electrode portions 123 and 143 are closely attached to surfaces of the heat-generating layers 121 and 141, respectively. However, according to the invention, the heat-generating layers need only be electrically connected to the electrode portions, and for example, conductive sheets or the like may be present between main surfaces of the electrode portions 123 and 143, and main surfaces of the heat-generating layers 121 and 141, respectively.

The sheet-like heater 12 included in the heater coupling body 10 of the invention has two insulating layers 127 and 129. The sheet-like heater 12 has a stacked structure in which the heat-generating layer 121 is stacked so as to be sandwiched between the two insulating layers 127 and 129.

The sheet-like heater 14 included in the heater coupling body 10 of the invention also has two insulating layers 147 and 149. The sheet-like heater 14 has a stacked structure in which the heat-generating layer 141 is stacked so as to be sandwiched between the two insulating layers 147 and 149.

As in the embodiment shown in FIG. 1 to FIG. 3, the heater coupling body of the invention preferably includes two or more insulating layers and has a laminated structure in which a heat-generating layer is stacked so as to be sandwiched between two insulating layers.

The heat-generating layers can be attached to their corresponding insulating layers with an adhesive.

Connecting wires or the like are connected to the electrode portions 123, 125, 143, and 145, and hence the electrode portions need to be exposed at their surfaces, as shown in FIG. 2. Therefore, the insulating layers 127 and 147 are not present at portions where the electrode portions 123, 125, 143, and 145 are present.

In other words, as shown in FIG. 1 to FIG. 3, the electrode portions may be exposed at their surfaces instead of having the insulating layers on their surfaces. On the other hand, for example, after the electrode portions 123 and 143 are connected to each other by a connecting wire, an insulating layer may be formed on the surfaces of the electrode portions with the use of molding resin or the like. On the electrode portions 125 and 145 as well, an insulating layer may be formed with the use of molding resin or the like after a connecting wire or the like is connected to the surface of each electrode portion.

In the heater coupling body 10 of the invention, the electrode portion 123 included in the sheet-like heater 12 on one side is connected to the electrode portion 143 included in the sheet-like heater 14 on the other side by a connecting wire 16. Then, as shown in FIG. 1, when the main surfaces of the heat-generating layers 121 and 141 are seen from their perpendicular line directions, at least parts of the heat-generating layers 121 and 141 in the respective sheet-like heaters 12 and 14 are present on a line L formed by the two electrode portions 123 and 143 connected to each other by the connecting wire 16.

The line L is a virtual line.

A line formed by connecting center points of surfaces of the two electrode portions 123 and 143 where they are connected to the connecting wire 16 is taken as the line L. Specifically, the electrode portion 123 is not connected to the connecting wire 16 at a point but a portion where the former is connected to the latter has a certain area (which is, for example, equivalent to a cross-section of the connecting wire 16 or a little larger than the cross-section). A line formed by connecting an arbitrary point approximately around the center within the portion to another arbitrary point similarly determined within a portion where the electrode portion 143 is connected to the connecting wire 16 is taken as the line L. In other words, any point may be used for the initial point and the terminal point of the line L as long as it is approximately around the center within the portion where the electrode portion 123 (or the electrode portion 143) is connected to the connecting wire 16.

The same applies to the line L in the heater-equipped piping of the invention to be described later.

In a conventional sheet-like heater using a connecting wire for its electrode, the electrode portion was present at an end on its main surface to make the connecting wire as short as possible. Therefore, in a case where two conventional sheet-like heaters of this type were prepared and the electrode portion of one sheet-like heater was connected to that of the other sheet-like heater by a connecting wire, when the main surface of the heat-generating layer of each sheet-like heater was seen from its perpendicular line direction, the heat-generating layer of each sheet-like heater was not present on a line formed by the two electrode portions connected to each other by the connecting wire.

Then, compared to others, an object to be heated could not be sufficiently heated from the portions of the sheet-like heaters where the electrode portions were present, and therefore, in a case where the conventional sheet-like heaters were attached to a surface of an object to be heated such as piping to heat the object to be heated, it was difficult to uniformly heat the object to be heated.

In contrast, on the sheet-like heater of the invention, each electrode portion is not present at an end on its main surface, and therefore, an object to be heated can be more uniformly heated.

In the heater coupling body 10 of the invention, the connecting wire 16 is preferably made of stranded wire.

The heater coupling body 10 of the invention is preferably used by respectively wrapping individual sheet-like heaters around surfaces of two straight pipe portions having a binding portion interposed therebetween, in piping including a part where the two straight pipe portions are connected together through the binding portion so that their axes may intersect each other, and connecting an electrode portion included in one sheet-like heater to an electrode portion included in the other sheet-like heater by a connecting wire.

In other words, the heater coupling body 10 of the invention can be used to manufacture the heater-equipped piping of the invention to be described later.

As described above, the sheet-like heater 12 included in the heater coupling body 10 of the invention that has been described using FIG. 1 to FIG. 3 has the two insulating layers 127 and 129, and the heat-generating layer 121 is stacked so as to be sandwiched between the two insulating layers 127 and 129. The sheet-like heater 14 included in the heater coupling body 10 of the invention also has the two insulating layers 147 and 149, and the heat-generating layer 141 is stacked so as to be sandwiched between the two insulating layers 147 and 149.

The method of attaching the insulating layers to their corresponding heat-generating layer is not limited and, for example, attachment with an adhesive is possible.

In the heater coupling body of the invention, a plurality of heat-generating layers may be stacked so as to be sandwiched between two insulating layers. In other words, the embodiment shown in FIG. 1 to FIG. 3 may be of a type in which the two layers including the insulating layers 127 and 147 are replaced by a single insulating layer 137 and the two layers including the insulating layers 129 and 149 are replaced by a single insulating layer 139.

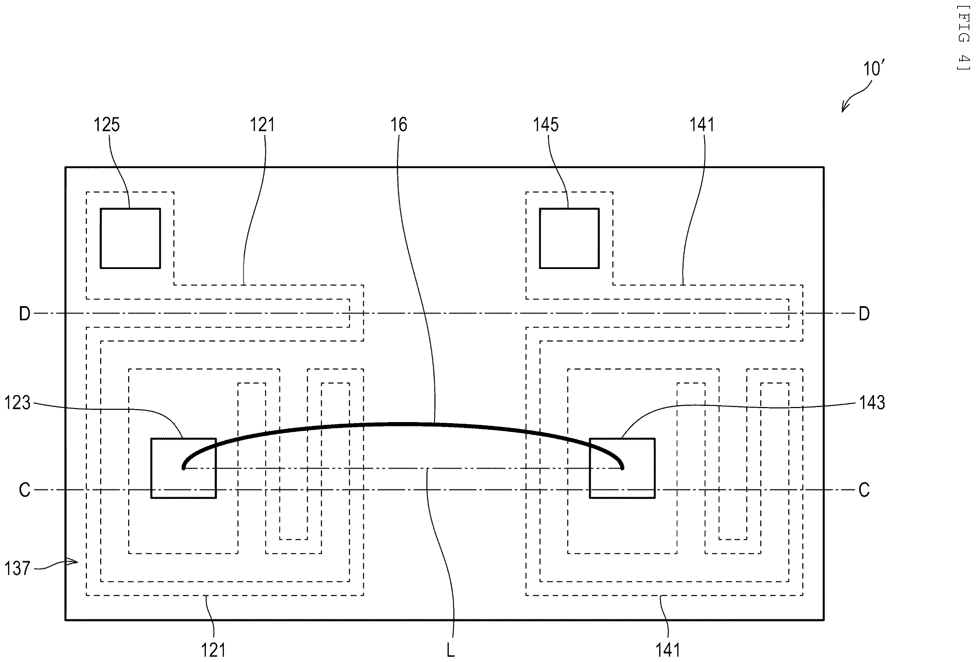

FIG. 4 to FIG. 6 show a heater coupling body 10' of the invention according to this embodiment.

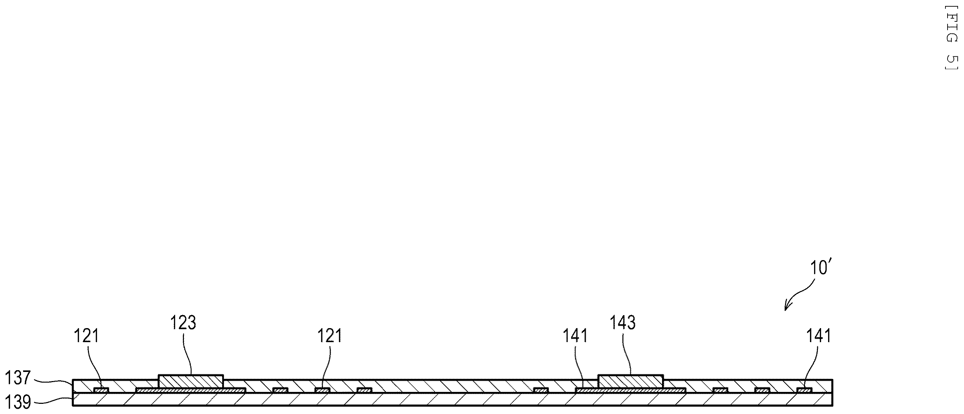

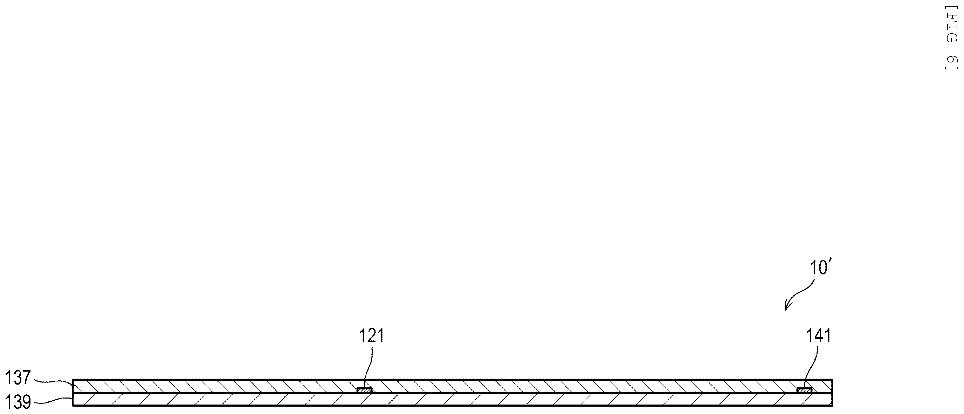

FIG. 4 is a view (schematic view) of a main surface of the heater coupling body 10' of the invention as seen from its perpendicular line direction. FIG. 5 is a cross-sectional view (schematic view) taken along line C-C in FIG. 4. FIG. 6 is a cross-sectional view (schematic view) taken along line D-D in FIG. 4.

As shown in FIG. 4 to FIG. 6, the electrode portions may be exposed at their surfaces instead of having the insulating layer on their surfaces. On the other hand, for example, after the electrode portions 123 and 143 are connected to each other by a connecting wire, an insulating layer may be formed on the surfaces of the electrode portions with the use of molding resin or the like. On the electrode portions 125 and 145 as well, an insulating layer may be formed with the use of molding resin or the like after a connecting wire or the like is connected to the surface of each electrode portion.

The heater coupling body of the invention according to this embodiment as typified by the heater coupling body 10' of the invention can be regarded as a sheet-like heater including a plurality of heat-generating layers, wherein the plurality of heat-generating layers are not stacked on top of another, one heat-generating layer and another heat-generating layer have electrode portions, respectively, which are electrically connected to their corresponding heat-generating layers, the electrode portions are connected to each other by a connecting wire, and when main surfaces of the heat-generating layers are seen from their perpendicular line directions, at least parts of the respective heat-generating layers are present on a line formed by the two electrode portions connected to each other by the connecting wire, and the sheet-like heater has a stacked structure in which the plurality of heat-generating layers are stacked so as to be sandwiched between two insulating layers.

The sheet-like heater 12 may have a sheet-like substrate through an adhesive layer or the like on a main surface of the insulating layer 127 and/or the insulating layer 129 which is not in contact with the heat-generating layer 121.

The sheet-like heater 14 may have a sheet-like substrate through an adhesive layer or the like on a main surface of the insulating layer 147 and/or the insulating layer 149 which is not in contact with the heat-generating layer 141.

The same applies to the embodiment described using FIG. 4 to FIG. 6, and a sheet-like substrate may be provided through an adhesive layer or the like on a main surface of the insulating layer 137 and/or the insulating layer 139 which is not in contact with the heat-generating layers 121 and 141.

The sheet-like substrate will be described later.

### <Heater-Equipped Piping of the Invention>

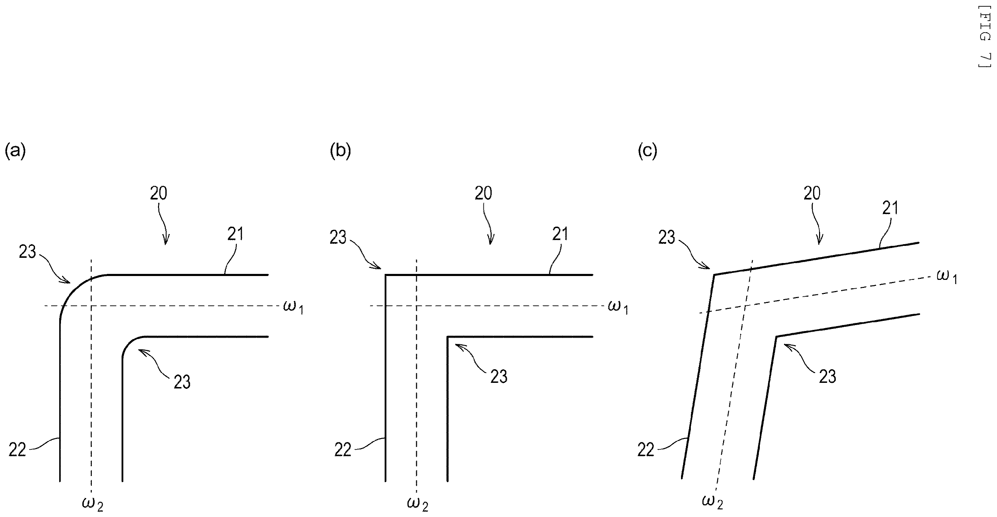

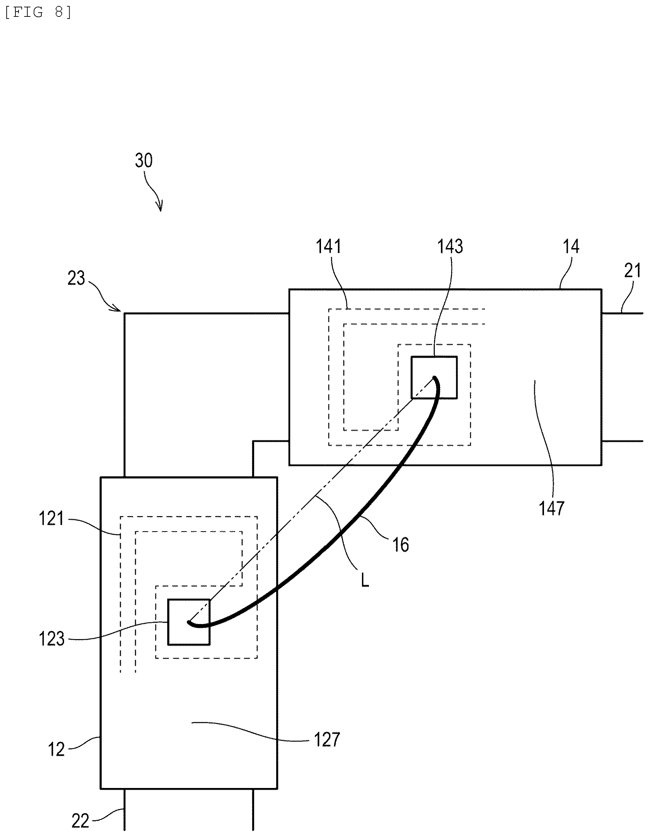

The heater-equipped piping of the invention will be described using FIG. 7 and FIG. 8.

Each of FIG. 7A to FIG. 7C illustrates piping 20 having two straight pipe portions 21 and 22 connected together through a binding portion 23 so that their axes ω₁ and ω₂ may intersect each other, and each drawing shows a cross-section on a surface on which the axes ω₁ and ω₂ pass.

FIG. 7A shows an example in which the axis ω₁ of the straight pipe portion 21 is perpendicular to the axis ω₂ of the straight pipe portion 22. The binding portion 23 is curved to smoothly connect the two straight pipe portions 21 and 22 to each other.

FIG. 7B shows an example in which the axis ω₁ of the straight pipe portion 21 is perpendicular to the axis ω₂ of the straight pipe portion 22 as in FIG. 7A. However, the binding portion 23 is not curved.

FIG. 7C shows an example in which the axis ω₁ of the straight pipe portion 21 and the axis ω₂ of the straight pipe portion 22 intersect each other but they do not intersect at right angles. The binding portion 23 is not curved.

The heater-equipped piping of the invention has the above-mentioned heater coupling body of the invention wrapped around specified piping as illustrated in FIG. 7.

If the heater coupling body of the invention is disposed on at least a part of a surface of the specified piping as described above, it means that the heater coupling body of the invention is wrapped around the surface of the specified piping.

FIG. 8 shows heater-equipped piping 30 of the invention in which the heater coupling body 10 of the invention illustrated in FIG. 1 to FIG. 3 is wrapped around the specified piping illustrated in FIG. 7B.

As shown in FIG. 8, the heater-equipped piping 30 of the invention is the one in which the heater coupling body 10 of the invention is wrapped around surfaces of the two straight pipe portions 21 and 22 of the piping having the binding portion 23 interposed therebetween, the piping including a part where the two straight pipe portions 21 and 22 are connected together through the binding portion 23 so that their axes ω₁ and ω₂ may intersect each other.

Individual sheet-like heaters are respectively disposed on the surfaces of the two straight pipe portions 21 and 22 having the binding portion 23 interposed therebetween. In the embodiment shown in FIG. 8, the sheet-like heaters 14 and 12 are disposed on the surfaces of the straight pipe portions 21 and 22, respectively.

In the embodiment shown in FIG. 8, no sheet-like heater is disposed on the binding portion 23. The sheet-like heater 12 on one side is preferably spaced apart from the sheet-like heater 14 on the other side by 0.5 to 5 mm at their closest positions. When the sheet-like heater 12 on the one side comes into contact with the sheet-like heater 14 on the other side at the binding portion 23, adhesion of the heater coupling body 10 to the piping may be reduced, thus making uniform heating difficult.

In a case where the electrode portion 123 included in the sheet-like heater 12 on the one side is connected to the electrode portion 143 included in the sheet-like heater 14 on the other side by the connecting wire 16, and the main surfaces of the heat-generating layers 121 and 141 are seen from their perpendicular line directions, at least parts of the heat-generating layers 121 and 141 in the respective sheet-like heaters 12 and 14 are present on the line L formed by the two electrode portions 123 and 143 connected to each other by the connecting wire 16.

In a case where the main surfaces of the heat-generating layers 121 and 141 are seen from their perpendicular line directions in a state in which the sheet-like heaters 12 and 14 are wrapped around the piping, this direction is parallel to a radial direction from a center point of a cross-section of the piping indicating the axis toward its outer peripheral side.

In the heater-equipped piping 30 of the invention, the connecting wire 16 is preferably made of stranded wire.

In the heater-equipped piping 30 of the invention, the sheet-like heaters 12 and 14 are preferably covered on their outer peripheral sides with a thermal insulation layer.

In addition to the sheet-like heaters 12 and 14, the binding portion 23 is also preferably covered on its outer peripheral side with a thermal insulation layer.

In the heater-equipped piping of the invention, the above-mentioned heater coupling body 10' (sheet-like heaters) of the invention having been described using FIG. 4 to FIG. 6 may be wrapped around the specified piping as illustrated in FIG. 7.

The heater-equipped piping of the invention according to this embodiment can be regarded as the one including: the heater coupling body (sheet-like heaters) of the invention wrapped around surfaces of the piping including a part where the two straight pipe portions are connected together through the binding portion so that their axes may intersect each other, wherein: the sheet-like heaters are provided so that individual heat-generating layers are respectively disposed on the surfaces of the two straight pipe portions having the binding portion interposed therebetween, the electrode portion included in the heat-generating layer on one side is connected to the electrode portion included in the heat-generating layer on the other side by the connecting wire, and in a case where main surfaces of the heat-generating layers are seen from their perpendicular line directions, at least parts of the respective heat-generating layers are present on the line formed by the two electrode portions connected to each other by the connecting wire.

### <Assembly Set of the Invention>

The assembly set of the invention will be described.

The assembly set of the invention is a set that can be used to assemble the above-mentioned heater coupling body of the invention.

The assembly set of the invention will be described using FIG. 1 to FIG. 3 and FIG. 7 to FIG. 8 as referred to above.

The assembly set of the invention includes two or more sheet-like heaters but a description will be given of a case where it includes two sheet-like heaters (sheet-like heaters 12 and 14).

The assembly set of the invention is a heater coupling body assembly set including the two sheet-like heaters 12 and 14, and the connecting wire 16. The sheet-like heaters 12 and 14 have the heat-generating layers 121 and 141, and the electrode portions 123 and 143 electrically connected to the heat-generating layers 121 and 141, respectively.

In a case where, in the piping including a part where the two straight pipe portions 21 and 22 are connected together through the binding portion 23 so that their axes ω₁ and ω₂ may intersect each other, the sheet-like heaters 12 and 14 are respectively wrapped around surfaces of the two straight pipe portions 21 and 22 having the binding portion 23 interposed therebetween, and the electrode portion 123 included in the sheet-like heater 12 on one side is connected to the electrode portion 143 included in the sheet-like heater 14 on the other side by the connecting wire 16, when main surfaces of the heat-generating layers 121 and 141 are seen from their perpendicular line directions, at least parts of the heat-generating layers 121 and 141 in the respective sheet-like heaters 12 and 14 are present on the line L formed by the two electrode portions 123 and 143 connected to each other by the connecting wire 16.

In the heater coupling body assembly set, the connecting wire is preferably made of stranded wire.

The heater coupling body assembly set preferably further has the two insulating layers 127 and 129. In this case, the heater coupling body assembly set is preferably used to configure the sheet-like heater 12 having a stacked structure in which the heat-generating layer 121 is stacked so as to be sandwiched between the two insulating layers 127 and 129.

The heater coupling body assembly set preferably further has the two insulating layers 147 and 149. In this case, the heater coupling body assembly set is preferably used to configure the sheet-like heater 14 having a stacked structure in which the heat-generating layer 141 is stacked so as to be sandwiched between the two insulating layers 147 and 149.

### <Heat-Generating Layer>

The heat-generating layer of the invention will be described.

The heat-generating layer is preferably in the shape of a sheet which generates heat by energization. As described above, the heat-generating layer is preferably formed to have a belt-shaped electric flow path through patterning. As described above, in the heat-generating layer, a heat-generating wire made of metal such as a Nichrome wire may be arranged so as to form a layer as a whole.

The heat-generating layer may be made of, for example, metal foil, metal mesh sheet, metal fiber sheet, or carbon sheet.

The material of the heat-generating layer is not particularly limited as long as it generates heat by energization, and is preferably stainless steel but may be Cu (copper), Al (aluminum), Ni (nickel), Nichrome, or carbon.

The heat-generating layer preferably has a thickness of 10 to 600 µm, and more preferably 20 to 150 µm. The thickness is preferably about 30 µm in terms of flexibility and strength.

The thickness of the heat-generating layer is determined as follows:
First, a cross-section in a direction parallel to the perpendicular line of a main surface of each sheet-like heater is obtained for the heater coupling body of the invention, the heater-equipped piping of the invention, or the assembly set of the invention. This cross-section corresponds to FIG. 2 and FIG. 3.

Next, an optical microscope is used to obtain a magnified photo (x200) of the cross-section and the thickness of the heat-generating layer on the magnified photo is then measured at arbitrarily selected 30 points, and a simple average value of measurements is determined.

Then, the resulting simple average value is taken as the thickness of the heat-generating layer.

In the practice of the invention, the thicknesses of the elements other than the heat-generating layer are also determined by the same method.

The shape and size of the main surface of the heat-generating layer can be appropriately adjusted according to the shape and size of an object to be heated on which the heater coupling body of the invention or the assembly set of the invention is to be disposed.

The heat-generating layer preferably has a resistance value of 5 to 800 Ω and more preferably 10 to 300 Q. When the resistance value is too low, the temperature may be increased too much due to excessively increased power, but when the resistance value is too high to the contrary, it may take time to increase the temperature due to excessively reduced power.

A value determined according to JIS K 7194 is taken as the resistance of the heat-generating layer.

The heat-generating layer is preferably primarily composed of metal fibers and more preferably only composed of metal fibers.

The term "primarily" means that the content is 70 mass% or more. In other words, the heat-generating layer preferably contains metal fibers in an amount of 70 mass% or more. The heat-generating layer contains metal fibers at a ratio of more preferably 80 mass% or more, even more preferably 90 mass% or more, and still more preferably 95 mass% or more.

The metal fiber content in the heat-generating layer is determined by the following method:
A surface of the heat-generating layer is taken with a scanning electron microscope (SEM) at a magnification of 1,000X to obtain an SEM image; the area of metal fibers (except voids) within its field of view is determined using an image processor and is raised to the three-halves power to be converted to volume ratio, which is further multiplied by the specific gravity to determine the mass ratio, thereby calculating the metal fiber content.

The metal fibers are preferably those having a cross-sectional diameter in terms of equal-area circle equivalent diameter of 2 to 100 µm (preferably 5 to 20 µm) and a length of 2 to 20 mm.

The heat-generating layer is preferably made of a metal fiber sheet in which an infinite number of such metal fibers are intricately entangled with each other to be formed into a sheet shape. The metal fiber sheet may be only composed of metal fibers but may contain, in addition to the metal fibers, materials other than the metal fibers (for example, resin fibers serving as a binder) as long as they do not impede heat generation.

The metal fibers constituting the metal fiber sheet are in contact with each other to such an extent that energization is established. The metal fibers are preferably connected to each other at their points of contact. For example, the metal fibers preferably have a history including melting of parts of the metal fibers through sintering at a high temperature and its subsequent solidification, and are heat-fused to each other at their points of contact.

The metal fiber sheet is preferably an SUS fiber sheet because of its high heat resistance and chemical resistance. An example of the SUS fiber sheet is a stainless steel fiber sheet (e.g., Tommy Filec SS manufactured by Tomoegawa Corporation).

The metal fiber sheet preferably has a basis weight of 25 g/m² or more, and preferably 50 g/m² or more. The basis weight is preferably 1,000 g/m² or less, and more preferably 200 g/m² or less.

A value determined according to JIS P 8124 is taken as the basis weight.

The metal fiber sheet preferably has a density of 1.0 to 10.0 g/cm³, more preferably 1.4 to 2.0 g/cm³, and preferably around 1.7 g/cm³.

A value determined according to JIS P 8118 using formula: Density (g/cm³) = Basis weight (g/m²) / (Thickness (mm) × 1,000) is taken as the density of the metal fiber sheet.

The metal fiber sheet can be manufactured by both a dry non-woven fabric manufacturing process and a wet papermaking process. When it is manufactured by the wet papermaking process, an infinite number of metal fibers which have a cross-sectional diameter of 2 to 100 µm in terms of equal-area circle equivalent diameter and a length of 2 to 20 mm are stirred in a dispersion medium (water, an organic solvent or the like) and an organic flocculant is then added. The mixture is formed into a sheet shape using a rectangular hand papermaking device (manufactured by Toyo Seiki Seisaku-sho, Ltd. or the like), and a dry sheet with a basis weight of 50 to 1,100 g/m² is obtained using a ferrotype drying device. Then, the dry sheet is burned at 400 to 1,300°C to obtain the metal fiber sheet. In principle, no organic flocculant preferably remains within the metal fiber sheet.

### <Electrode Portion>

The electrode portions in the invention will be described.

The invention has the electrode portions electrically connected to the heat-generating layer. The electrode portions may not be directly connected to the heat-generating layer but may be electrically connected to the heat-generating layer, for example, through a member having electrical conductivity. Such a member having electrical conductivity may be of the same type as the electrode portions.

The material of the electrode portions is not particularly limited. The electrode portions may be made of Cu (copper), Ag (silver), or Au (gold) but is more preferably made of stainless steel (for example, SUS304, SUS316, or SUS 316L).

For example, metal foil, metal mesh sheet formed by arranging linear fibers in directions approximately perpendicular to each other, metal fiber non-woven or woven fabric formed by randomly arranging metal fibers, metal fiber yarn, or metal fiber tape may be used for the electrode portions.

Specific examples of the metal mesh sheet include 200 to 500-mesh metal mesh sheets.

An example of the metal fiber non-woven fabric is 1,500 g/m²-stainless steel fiber non-woven fabric (SUS316L needle punched web manufactured by Nikko Techno, Ltd.).

An example of the metal fiber woven fabric is SUS cloth (Naslon Cloth A manufactured by Nippon Seisen Co., Ltd.).

An example of the metal fiber yarn is filament yarn (Naslon 12-2000/3 manufactured by Nippon Seisen Co., Ltd.).

An example of the metal fiber tape is SUS tape (Naslon Tape B W16 manufactured by Nippon Seisen Co., Ltd.).

The electrode portions preferably have a specific electrical resistance of 5 to 100 µΩcm, more preferably 5 to 70 µΩcm, and even more preferably 5 to 50 µΩcm.

The specific electrical resistance of the electrode portions is represented by a value calculated by the calculation formula: "Specific electrical resistance = 1 / Electrical conductivity" by reference to the electrical conductivity obtained from the elemental composition after the electrode portions are subjected to XRD analysis to determine their constituent composition.

The electrode portions are preferably made of metal foil.

The electrode portions preferably have a thickness of 5 to 100 µm.

The method of electrically connecting the electrode portions to the heat-generating layer is not particularly limited. For example, the electrode portions can be attached to the main surface of the heat-generating layer with an adhesive while being closely attached thereto, or be attached by welding.

### <Connecting Wire>

The connecting wire of the invention will be described.

The connecting wire electrically connects an electrode portion included in one sheet-like heater to an electrode portion included in another sheet-like heater.

The connecting wire may be of any type as long as an electrode portion included in one sheet-like heater is electrically connected to an electrode portion included in another sheet-like heater so that electricity having passed through a heat-generating layer included in the former may flow into a heat-generating layer included in the latter through the connecting wire.

The connecting wire should be made of an electrically conductive material, and it may be, for example, Cu (copper), Al (aluminum), Ni (nickel), Nichrome, or carbon.

The length and the thickness of the connecting wire are not particularly limited. The thickness (cross-sectional diameter) may be, for example, 0.5 to 2.0 mm.

A single wire or a processed wire (spiral processing, rolling processing or stranded wire processing) may be used for the connecting wire.

A bare wire or a covered wire may be used for the connecting wire.

The connecting wire is preferably made of stranded wire.

The connecting wire is preferably excellent in flexibility, because electrode portions which are not disposed at ends of sheet-like heaters can be easily connected to each other.

The stranded wire used as the connecting wire is excellent in flexibility.

The method of electrically connecting the connecting wire to the electrode portions is not particularly limited. For example, the connecting wire can be attached to the main surfaces of the electrode portions with an adhesive while being closely attached thereto, or be attached by welding.

### <Insulating Layer>

The insulating layers of the invention will be described.

In a case where the invention includes a plurality of insulating layers, they may be of the same type or different types.

Each insulating layer plays a role in electrically insulating the heat-generating layer and other elements from each other.

The insulating layers preferably have thermal conductivity in addition to insulation properties.

The insulating layers are preferably made of, for example, PET (polyethylene terephthalate), PI (polyimide), PP (polypropylene), PE (polyethylene), PEN (polyethylene naphthalate), TAC (triacetyl cellulose), or ceramic, because they have high insulation properties. Among others, the insulating layers made of PI (polyimide) are preferred because of their excellent heat resistance and insulation properties.

The thickness of the insulating layers is not limited and is preferably 25 to 75 µm, and more preferably 40 to 60 µm.

There is no particular limitation on the shapes and sizes of the main surfaces of the insulating layers. However, each insulating layer plays a role in electrically insulating the heat-generating layer and other layers from each other and therefore the size of the main surface of each insulating layer is in general the same as or larger than that of the main surface of the heat-generating layer.

### <Sheet-like Substrate>

In a case where the invention includes a sheet-like substrate, exemplary materials of the sheet-like substrate include those having insulation properties and flexibility such as PET (polyethylene terephthalate), PI (polyimide), PP (polypropylene), PE (polyethylene), PEN (polyethylene naphthalate), and TAC (triacetyl cellulose).

The sheet-like substrate may be made of fluororesin. Examples of the fluororesin include polytetrafluoroethylene (PTFE), vinylidene fluoride-hexafluoropropylene copolymer, and vinylidene fluoride-tetrafluoroethylene-hexafluoropropylene copolymer.

Further, the sheet-like substrate may be a high-strength/high-insulation sheet obtained by impregnating reinforced fibers such as glass, aramid (aromatic polyamide resin) and carbon fiber with fluororesin.

The thickness of the sheet-like substrate is not particularly limited and is preferably 100 to 300 µm, and more preferably 125 to 200 µm.

### <Adhesive>

As described above, the insulating layers can be attached to their corresponding heat-generating layer(s) with an adhesive. The electrode portions may be attached to their corresponding heat-generating layer with an adhesive. Further, an adhesive may be used to attach the sheet-like substrate to a main surface of the insulating layer which is not in contact with the heat-generating layer.

Examples of the adhesive that may be used in the invention include acrylic adhesive, silicone adhesive, rubber elastomer, thermosetting adhesive, and thermoplastic adhesive.

The adhesive may be replaced by an adhesive sheet made of a material of the same type.

### <Thermal Insulation layer>

As described above, in the heater-equipped piping of the invention, the sheet-like heaters are preferably covered on their outer peripheral sides with a thermal insulation layer. In addition to the sheet-like heaters, the binding portion of the piping is also preferably covered on its outer peripheral side with a thermal insulation layer.

Examples of the thermal insulation material making up the thermal insulation layer include fibrous thermal insulation materials (e.g., glass wool, rock wool, cellulose fiber, and Wool Breath), and foam thermal insulation materials (e.g., urethane foam, phenolic foam, melamine foam, Teflon foam, and polyimide foam).

The thickness of the thermal insulation layer is not particularly limited, and is preferably 15 to 100,000 µm, more preferably 30 to 50,000 µm, and even more preferably 6,000 to 10,000 µm.

This application claims priority based on Japanese Patent Application No. 2023-47145 filed on March 23, 2023, the entire disclosure of which is incorporated herein by reference.

### REFERENCE SIGNS LIST

10, 10' heater coupling body of the invention
12, 14 sheet-like heater
121, 141 heat-generating layer
123, 143 electrode portion
125, 145 electrode portion
127, 129 insulating layer
137, 139 insulating layer
147, 149 insulating layer
16 connecting wire
L line (virtual line)
20 piping
21, 22 straight pipe portion
23 binding portion
ω₁, ω₂ axis
30 heater-equipped piping of the invention

## Claims

1. A heater coupling body comprising: a plurality of sheet-like heaters, wherein:
each of the sheet-like heaters has a heat-generating layer; and electrode portions electrically connected to the heat-generating layer,
an electrode portion included in one sheet-like heater is connected to an electrode portion included in another sheet-like heater by a connecting wire, and
when main surfaces of heat-generating layers are seen from their perpendicular line directions, at least parts of the heat-generating layers in the respective sheet-like heaters are present on a line formed by the two electrode portions connected to each other by the connecting wire.

2. The heater coupling body according to claim 1, wherein each of the sheet-like heaters has a stacked structure in which the heat-generating layer is stacked so as to be sandwiched between two insulating layers.

3. The heater coupling body according to claim 1 or 2, wherein the connecting wire is made of stranded wire.

4. The heater coupling body according to any one of claims 1 to 3, wherein the heat-generating layer has a thickness of 20 to 150 µm and a resistance value of 10 to 300 Ω.

5. The heater coupling body according to any one of claims 1 to 4, wherein the heater coupling body is used by respectively wrapping individual sheet-like heaters around surfaces of two straight pipe portions having a binding portion interposed therebetween, in piping including a part where the two straight pipe portions are connected together through the binding portion so that their axes may intersect each other, and connecting the electrode portion included in the one sheet-like heater to the electrode portion included in the another sheet-like heater by the connecting wire.

6. A heater coupling body assembly set comprising: a plurality of sheet-like heaters and a connecting wire, wherein:
each of the sheet-like heaters has a heat-generating layer; and electrode portions electrically connected to the heat-generating layer, and
in a case where, in piping including a part where two straight pipe portions are connected together through a binding portion so that their axes may intersect each other, individual sheet-like heaters are respectively wrapped around surfaces of the two straight pipe portions having the binding portion interposed therebetween, and an electrode portion included in one sheet-like heater is connected to an electrode portion included in another sheet-like heater by the connecting wire, when main surfaces of heat-generating layers are seen from their perpendicular line directions, at least parts of the heat-generating layers in the respective sheet-like heaters are present on a line formed by the two electrode portions connected to each other by the connecting wire.

7. The heater coupling body assembly set according to claim 6, wherein each of the sheet-like heaters has a stacked structure in which the heat-generating layer is stacked so as to be sandwiched between two insulating layers.

8. The heater coupling body assembly set according to claim 6 or 7, wherein the connecting wire is made of stranded wire.

9. The heater coupling body assembly set according to any one of claims 6 to 8, wherein the heat-generating layer has a thickness of 20 to 150 µm and a resistance value of 10 to 300 Ω.

10. Heater-equipped piping comprising: the heater coupling body according to claim 1 or 2 wrapped around surfaces of piping including a part where two straight pipe portions are connected together through a binding portion so that their axes may intersect each other, wherein:
individual sheet-like heaters are respectively disposed on surfaces of the two straight pipe portions having the binding portion interposed therebetween,
an electrode portion included in one sheet-like heater is connected to an electrode portion included in another sheet-like heater by a connecting wire, and
when main surfaces of heat-generating layers are seen from their perpendicular line directions, at least parts of the heat-generating layers in the respective sheet-like heaters are present on a line formed by the two electrode portions connected to each other by the connecting wire.

11. The heater-equipped piping according to claim 10, wherein the connecting wire is made of stranded wire.

12. The heater-equipped piping according to claims 10 or 11, wherein each heat-generating layer has a thickness of 20 to 150 µm and a resistance value of 10 to 300 Ω.

13. The heater-equipped piping according to any one of claims 10 to 12, wherein the sheet-like heaters are covered on their outer peripheral sides with a thermal insulation layer.
